# EUROPÄISCHE PATENTSCHRIFT

(11) **EP 3 470 381 B1**
(45) Veröffentlichungstag und Bekanntmachung des Hinweises auf die Patenterteilung: **22.04.2020**
(21) Anmeldenummer: 18199480.7
(22) Anmeldetag: 10.10.2018
(51) Int. Cl.: C03B 3/00

(54) **BESCHICKUNGSVORRICHTUNG FÜR EINE GLASSCHMELZANLAGE**
FEEDING DEVICE FOR A GLASS MELT ASSEMBLY
DISPOSITIF DE CHARGEMENT POUR UNE INSTALLATION DE FONTE DE VERRE

(30) Priorität: 12.10.2017 DE 102017123803
(43) Veröffentlichungstag der Anmeldung: 17.04.2019
(73) Patentinhaber: Beteiligungen Sorg GmbH & Co. KG, 97816 Lohr am Main (DE)
(72) Erfinder: Sorg, Helmut, 63864 Glattbach (DE); Heigl, Philipp, 97318 Kitzingen (DE); Müller, Volker, 97854 Steinfeld-Hausen (DE)
(74) Vertreter: Keil & Schaafhausen Patentanwälte PartGmbB

(56) Entgegenhaltungen:
- DE-B3-102010 035 893
- GB-A- 664 869
- US-A- 2 212 358

## Beschreibung

Die Erfindung betrifft eine Beschickungsvorrichtung für eine Glasschmelzanlage, welche der Glasschmelzanlage Schüttgut bestehend aus Scherben und/oder Rohstoffgemenge zuführt.

Bei der Herstellung von Glasprodukten besteht das einer Schmelzwanne oder einem Doghouse der Glasschmelzanlage kontinuierlich oder diskontinuierlich zugeführte Schüttgut aus Scherben und primären Rohstoffen (Rohstoffgemenge). Die Scherben können aus dem Rücklauf fehlerhafter Produktionen stammen und/oder sogenannte Recyclingscherben sein. Als Rohstoffgemenge werden die Ausgangs-Rohstoffe für die Glasproduktion bezeichnet. Diese umfassen beispielsweise Quarzsand, Soda, Nitrat, Sulfat, Natriumsulfat, Pottasche, Feldspat, Tonerde, Kalk und Dolomit. Diese Rohstoffe werden in der gewünschten Zusammensetzung in Form des Rohstoffgemenges der Glasschmelzanlage zugeführt.

Unter einer Beschickungsvorrichtung wird eine eine von der Glasschmelzanlage separate Einheit bildende Vorrichtung bezeichnet, welche das in einem oder mehreren Vorratsbehältern zur Verfügung gestellte Schüttgut der Glasschmelzanlage (d.h. einer Schmelzwanne direkt oder einem Doghouse) in einer vorgebbaren Menge pro Zeiteinheit zuführt. Hierfür wird die Beschickungsvorrichtung zwischen dem einen oder mehreren Vorratsbehältern und der Glasschmelzanlage angeordnet.

Da die Zuführung des Schüttguts durch eine Öffnung der Glasschmelzanlage hindurch erfolgt, ist es bei Beschickungsvorrichtungen für Glasschmelzanlagen von besonderem Interesse, dass eine staubdichte und eine die Wärme aus der Glasschmelzanlage zurückhaltende Abdichtung zwischen der Glasschmelzanlage und der Beschickungsvorrichtung erfolgt. Eine Beschickungsvorrichtung weist häufig eine Abdichteinrichtung (z.B. ein Hitzeschild) auf, die bei Betrieb der Beschickungsvorrichtung zumindest bereichsweise unmittelbar an der Wand der Glasschmelzanlage (d.h. der Wand der Schmelzwanne oder des Doghouses) oder mit einem möglichst geringen Abstand von der Wand der Glasschmelzanlage angeordnet wird.

In dem Dokument US 2,212,358 A wird eine Staubentfernung innerhalb eines mit einer Abdeckung versehenen Vorbaus einer Glasschmelzwanne beschrieben, wobei die Staubentfernung im Bereich einer Zuführung für Ausgangsstoffe angeordnet wird.

In der Druckschrift DE 10 2010 035 893 B3 wird beschrieben, dass das Schüttgut über eine oder mehrere Schnecken in Richtung Glasschmelzanlage zwangsgeführt wird. Diese Art der Zuführung hat den Nachteil, dass das zugeführte Schüttgut aus dem Zuführrohr der bekannten Beschickungsvorrichtung lediglich auf der Oberfläche der Glasschmelze, die in der Schmelzanlage angeordnet ist, abgelegt wird. Diese Vorgehensweise ist jedoch nachteilig in Bezug auf das Aufschmelzen des Schüttguts. Daher wurde in der Druckschrift DE 10 2010 035 893 B3 vorgeschlagen, einen Schieber (Paddel) zu verwenden, um das zugeführte Schüttgut auf der Oberfläche der Glasschmelze besser zu verteilen. Der Schieber verläuft quer zu der Zuführungsrichtung des Schüttguts und ist an einer Bewegungseinrichtung (z.B. Gestänge) befestigt, welche mit einem Antrieb verbunden ist. Mittels des Antriebs wird eine zyklische Bewegung des Schiebers erzeugt. Hierdurch kann der Schieber beispielsweise zunächst in das auf der Oberfläche der Glasschmelze abgelegte Schüttgut (zum Beispiel Rohstoffgemenge) eintauchen und dieses von der Beschickungsvorrichtung weg in Richtung Mitte der Glasschmelzanlage verschieben. Anschließend wird der Schieber aus dem Schüttgut angehoben und wieder an die ursprüngliche Position zurückbewegt. Aus Druckschrift DE 10 2010 035 893 B3 ergibt sich weiter, dass die Bewegungseinrichtung durch eine Öffnung in der Wand der Glasschmelzanlage und gegebenenfalls durch mindestens eine Durchführung der Abdichteinrichtung der Beschickungsvorrichtung hindurch geführt werden muss. Der Schieber ist auf der Vorderseite der Abdichteinrichtung (d.h. auf der der Glasschmelzanlage zugewandten Seite der Abdichteinrichtung beziehungsweise innerhalb der Glasschmelzanlage) und der Antrieb der Bewegungseinrichtung ist auf der Rückseite der Abdichteinrichtung der Beschickungsvorrichtung (d.h. der der Glasschmelzanlage abgewandten Seite der Abdichteinrichtung angeordnet.

Bei der Verwendung einer derartigen Beschickungsvorrichtung wird beobachtet, dass die Öffnung der Wand der Glasschmelzanlage und gegebenenfalls die Durchführung oder die Durchführungen in der Abdichteinrichtung der Beschickungsvorrichtung eine Quelle für Staubaustrag oder Abgasaustrag aus dem Inneren der Glasschmelzanlage darstellt. Flexible Abdichtungen für die Bewegungseinrichtung (Gestänge) des Schiebers, beispielsweise ein Faltenbalg oder eine besenartige Dichtung, zeigen einen hohen Verschleiß und eine sich im Betrieb schnell verringernde Wirksamkeit. Eine flexible Abdichtung ist in dem Bereich der Öffnung bzw. der Durchführung hohen Temperaturen ausgesetzt. Ferner sammelt sich der Staub beispielsweise in dem Faltenbalg an, sodass die Beweglichkeit des Faltenbalgs beeinträchtigt wird. Die Staubansammlung führt schlimmstenfalls zu einer mechanischen Zerstörung des Faltenbalgs.

Aufgabe der vorliegenden Erfindung ist es daher, eine Beschickungsvorrichtung zu schaffen, welche eine bessere Abdichtung der mindestens einen Bewegungseinrichtung (z.B. für den Schieber) bewirkt, die zudem in ihrer Wirksamkeit über einen langen Zeitraum nicht beeinträchtigt wird.

Die oben genannte Aufgabe wird gelöst durch eine Beschickungsvorrichtung für eine Glasschmelzanlage mit den Merkmalen des Anspruchs 1.

Erfindungsgemäß umfasst die Beschickungsvorrichtung mindestens eine Gasdüse, die benachbart zu einem offenen Bereich jeder Durchführung der Abdichteinrichtung auf der der Glasschmelzanlage abgewandten Seite der Abdichteinrichtung derart angeordnet ist, dass das aus der mindestens einen Gasdüse strömende Gas die Menge an Staub und/oder Abgas verringert, die aus der Glasschmelzanlage durch die jeweilige Durchführung hindurch auf die der Glasschmelzanlage abgewandten Seite der Abdichteinrichtung gelangt und dass ein Düsenring vorgesehen ist,der sich um die vorzugsweise stangenförmige Bewegungseinrichtung herum erstreckt und eine Vielzahl von Gasdüsen aufweist.

Dies bedeutet dass die erfindungsgemäße mindestens eine Gasdüse auf der Rückseite der Abdichteinrichtung benachbart zu einem offenen Bereich der Durchführung derart angeordnet ist, dass das aus der mindestens einen Gasdüse strömende Gas die Menge an Staub und/oder Abgas verringert, die aus einem auf der Vorderseite der Abdichteinrichtung liegenden Bereich durch die Durchführung in einen auf der Rückseite der Abdichteinrichtung liegenden Bereich hindurchtritt. Vorzugsweise führt die erfindungsgemäße Abdichtung der Durchführung zu einer signifikanten, fast vollständigen Verringerung des Staubund/oder Abgasaustrags aus der Glasschmelzanlage. Die durch die vorliegende Erfindung erzielte Verringerung der durch die Durchführung oder die Durchführungen gelangende Staub- und/oder Abgasmenge beträgt mindestens 80%, vorzugsweise mindestens 90%, besonders bevorzugt mindestens 95%.

Ein weiterer Vorteil der erfindungsgemäßen Beschickungsvorrichtung besteht darin, dass die Abdichtung gewissermaßen berührungslos erfolgt, d.h. dass die mindestens eine Gasdüse nicht in direkter mechanischer Verbindung mit der Abdichteinrichtung und/oder der Wand der Glasschmelzanlage steht. Die mindestens eine Gasdüse ist mit einem vorgegebenen Abstand von der Abdichteinrichtung und der Durchführung angeordnet. Dies führt zu einem wesentlich geringeren Verschleiß der Abdichtung verglichen mit den oben beschriebenen alternativen Lösungen.

Als Gas für die Gasdüse wird vorzugsweise Luft (z.B. Pressluft oder Gebläseluft) verwendet. Andere Gase sind jedoch ebenfalls denkbar.

Die Anordnung der Gasdüse benachbart zu dem offenen Bereich der Durchführung in der Abdichteinrichtung bedeutet, dass der Abstand zwischen Gasdüse und Durchführung derart gestaltet ist, dass die aus der Gasdüse entweichenden Gaspartikel den offenen Bereich der Durchführung erreichen und dort noch eine ausreichende Geschwindigkeit besitzen, dass zumindest der allergrößte Teil (mindestens 80%, siehe oben) der aus der Glasschmelzanlage kommenden Gas- und/oder Staubpartikel durch Stoß mit den Abgaspartikeln der Gasdüse so abgelenkt wird, dass die Gas- und/oder Staubpartikel dieses Teils nicht durch die Durchführung hindurchtreten. Für viele Anwendungen beträgt der Abstand der mindestens einen Gasdüse von dem Ende der Durchführung, das der Gasdüse zugewandt ist, beispielsweise maximal 40 cm, vorzugsweise maximal 30 cm. Je näher die mindestens eine Gasdüse an der Durchführung sitzt, umso besser kann diese das Austreten von Staub und/oder Abgas aus der Glasschmelzanlage verhindern.

Die erfindungsgemäße Beschickungsvorrichtung kann eine Vielzahl von Zuführeinrichtungen für das Schüttgut, die vorzugsweise in horizontaler Richtung nebeneinander angeordnet sind, aufweisen. Weiter kann die Beschickungsvorrichtung mindestens zwei Schieber und entsprechend jeweils eine Bewegungseinrichtung (ein oder mehrere durch einen Antrieb bewegte Bauteile wie Gestänge) für jeden Schieber aufweisen. Die Beschickungsvorrichtung kann für alle Bewegungseinrichtungen einen gemeinsamen Antrieb oder für jede Bewegungseinrichtung einen separaten Antrieb besitzen. Bei Verwendung von mehreren Bewegungseinrichtungen kann für jede Bewegungseinrichtung
- eine separate Durchführung durch die Abdichteinrichtung und
- mindestens eine separate Gasdüse (z.B. ein Düsenring)
vorgesehen sein, um die Abdichtung besonders effektiv zu gestalten. Hierbei schließt die zyklische Bewegung der Bewegungseinrichtung(en) lineare Bewegungen, Bewegungen vor und zurück und Schwenkbewegungen bzw. Kombinationen aus diesen Bewegungen ein. Die Bewegungen der Bewegungseinrichtung(en) verlaufen horizontal und/oder vertikal.

Erfindungsgemäß ist ein Düsenring vorgesehen, der sich um die vorzugsweise stangenförmige Bewegungseinrichtung herum erstreckt und eine Vielzahl von Gasdüsen aufweist. Dieses Ausführungsbeispiel erlaubt eine Abdichtung im gesamten offenen Bereich der Durchführung um die Bewegungseinrichtung herum. Der Düsenring kann beispielsweise als ringförmiges oder ellipsoid ausgeführtes Rohr gestaltet sein, das entlang der Längsrichtung des Rohrs (d.h. entlang des Rings oder des Ellipsoids) eine Vielzahl von Gasdüsen-Öffnungen aufweist. Bevorzugt ist das Rohr mit einer Gasversorgung verbunden, wobei der Anschluss vorzugsweise flexibel ausgeführt ist. Es ist weiterhin für die Montage vorteilhaft, dass der Düsenring mehrteilig ausgebildet ist, wobei während der Montage und Einrichtung der Beschickungsvorrichtung die mindestens zwei Teile des Düsenrings vorzugsweise lösbar aneinander befestigt werden. Der Düsenring kann die Bewegungseinrichtung teilweise oder vollständig umschließen.

In einer Weiterbildung der Erfindung ist ein Mitnehmer vorgesehen, an welchem die mindestens eine Gasdüse befestigt ist und welcher die mindestens eine Gasdüse bei einer Bewegung der Bewegungseinrichtung relativ zu der Abdichteinrichtung (beispielsweise vertikal) derart verschiebt, dass der Gasstrom der mindestens einen Gasdüse stets auf den offenen Bereich der Durchführung gerichtet ist. Dies ist vorteilhaft, da die mit dem Schieber (Paddel) verbundene Bewegungseinrichtung im Betrieb der Beschickungsvorrichtung ständig in Bewegung ist und ihre Position in Bezug auf die Durchführung laufend verändert.

Der Mitnehmer kann plattenförmig, beispielsweise als Schiebeplatte, gestaltet sein, wobei die Platte eine durchgehende Öffnung oder Ausnehmung aufweist, durch die die Bewegungseinrichtung hindurch geführt ist. Die mindestens eine Gasdüse beziehungsweise der Düsenring ist im Bereich des Rands der durchgehenden Öffnung oder Ausnehmung der Schiebeplatte angeordnet. Der Düsenring kann dabei auf der der Glasschmelzanlage zugewandten Seite der Schiebeplatte und/oder auf der der Glaschmelzanlage abgewandten Seite der Schiebeplatte angeordnet sein. Um die Montage zu erleichtern, kann ein solcher Mitnehmer mehrteilig gestaltet sein, wobei während der Montage und Einrichtung der Beschickungsvorrichtung die mindestens zwei Teile des Mitnehmers vorzugsweise lösbar aneinander befestigt werden. Die Öffnung oder Ausnehmung in dem Mitnehmer ist vorzugsweise in ihrer Querschnittsfläche kleiner als die Querschnittsfläche der zugeordneten Durchführung der Abdichteinrichtung, wobei der Querschnitt in vertikaler Richtung betrachtet wird. Entsprechend ist/sind der vertikale und/oder der horizontale Durchmesser der Öffnung oder Ausnehmung des Mitnehmers kleiner als der vertikale und/oder der horizontale Durchmesser der Durchführung der Abdichteinrichtung.

Es ist weiter von Vorteil, wenn der Mitnehmer an der der Abdichteinrichtung zugewandten Seite eine Leiteinrichtung aufweist, welche das der mindestens einen Gasdüse entweichende Gas in Richtung Durchführung lenkt. Die Leiteinrichtung besteht beispielsweise aus mindestens zwei Leitblechen, die z.B. auf zwei gegenüberliegenden Seiten der mindestens einen Gasdüse beziehungsweise des Düsenrings angeordnet sind. In einem Ausführungsbeispiel ist ein erstes Leitblech an der Oberseite des Düsenrings und ein zweites Leitblech an der Unterseite des Düsenrings angeordnet. Bevorzugt weist das erste und das zweite Leitblech jeweils eine konkave Krümmung auf und/oder ist schalenförmig gestaltet. Die Leiteinrichtung kann die mindestens eine Gasdüse teilweise oder vollständig umschließen. Mittels der Leiteinrichtung kann die Abdichtung durch die mindestens eine Gasdüse noch effektiver gestaltet werden.

In einem Ausführungsbeispiel der erfindungsgemäßen Beschickungsvorrichtung ist der Mitnehmer mittels einer Rolle an der Bewegungseinrichtung abgestützt. Dies ist eine besonders einfache Möglichkeit, die vertikale Ausrichtung des Mitnehmers bei einer gleichzeitig horizontalen Verschiebbarkeit der Bewegungseinrichtung zu bewerkstelligen.

In einem weiteren Ausführungsbeispiel wird die vertikale Ausrichtung der mindestens einen Gasdüse auf die Durchführung dadurch erreicht, dass der Mitnehmer mittels mindestens einer Rolle und/oder einer Schiene parallel zu der Abdichteinrichtung geführt wird. Die mindestens eine Rolle und/oder Schiene ist hierbei vorzugsweise an der Abdichteinrichtung, jeweils in einem vorgegebenen Abstand, befestigt. Hierdurch wird der Mitnehmer in vertikaler Richtung hin und her bewegt und folgt der zyklischen Bewegung der Bewegungseinrichtung. Dabei bleibt aufgrund der parallelen Führung zu der Abdichteinrichtung der Abstand des Mitnehmers von der Abdichteinrichtung (Abstand in horizontaler Richtung) konstant.

Für eine effektive Abdichtung der Durchführung ist es weiter von Vorteil, wenn der Ausgangsdruck der mindestens einen Gasdüse mindestens 80% des Betrags des Innendrucks der Glasschmelzanlage, vorzugsweise mindesten 90% des Betrags des Innendrucks der Glasschmelzanlage, besonders bevorzugt mindestens 110% und/oder maximal 200% des Betrags des Innendrucks der Glasschmelzanlage beträgt. In einem Ausführungsbeispiel der vorliegenden Erfindung kann der Innendruck der Glasschmelzanlage (z.B. in der Schmelzwanne oder in dem Doghouse) gemessen und der Ausgangsdruck des die mindestens eine Gasdüse verlassenden Gases entsprechend des jeweiligen aktuellen Innendruck-Messwerts angepasst werden. Oben wurde jeweils der Betrag (Wert) des Innendrucks der Glasschmelzanlage (z.B. der Glasschmelzwanne) herangezogen, da der Druck der Gasdüse in jedem Fall ein Überdruck (positiver Wert) ist, um die oben dargestellte Wirkung zu erzielen. Wenn der Innendruck der Glasschmelzanlage negativ ist, so soll in diesem Fall das (negative) Vorzeichen des Innendrucks für die Bestimmung des Ausgangsdrucks der Glasschmelzanlage nicht berücksichtigt werden.

Die Erfindung wird nachfolgend anhand von Ausführungsbeispielen und unter Bezugnahme auf die Figuren erläutert. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbezügen.

Es zeigen schematisch:
- Fig. 1: eine Prinzipdarstellung einer erfindungsgemäßen Beschickungsvorrichtung, das an der Schmelzwanne oder einem Doghouse einer Glasschmelzanlage angeordnet ist, in einem Längsschnitt,
- Fig. 2: einen Schnitt durch eine Abdichtplatte der Prinzipdarstellung einer Beschickungsvorrichtung gemäß Fig. 1,
- Fig. 3: einen Ausschnitt des Längsschnitts eines ersten Ausführungsbeispiels der Beschickungsvorrichtung,
- Fig. 4: die Schiebeplatte eines zweiten Ausführungsbeispiels einer Beschickungsvorrichtung mit der Ringdüse in einer Ansicht von hinten,
- Fig. 5: die Schiebeplatte gemäß Fig. 4 in einer Ansicht von der Seite,
- Fig. 6: die Schiebeplatte gemäß Fig. 4 in einer perspektivischen Ansicht von hinten,
- Fig. 7: einen Ausschnitt des Längsschnitts eines dritten Ausführungsbeispiels der Beschickungsvorrichtung,
- Fig. 8: einen Querschnitt entlang der Linie A-A durch den in Fig. 7 gezeigten Ausschnitt,
- Fig. 9: einen Ausschnitt des Längsschnitts eines vierten Ausführungsbeispiels der Beschickungsvorrichtung,
- Fig. 10: einen Ausschnitt des Längsschnitt eines fünften Ausführungsbeispiels der Beschickungsvorrichtung,
- Fig. 11: einen Ausschnitt des Längsschnitt eines sechsten Ausführungsbeispiels der Beschickungsvorrichtung und
- Fig. 12: die Schiebeplatte der Beschickungsvorrichtung gemäß Fig. 11 in einer Ansicht von vorn.

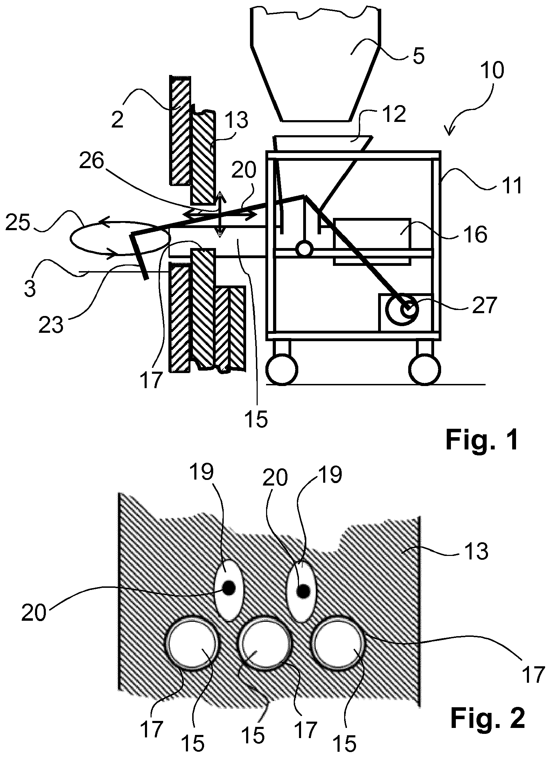

Fig. 1 zeigt eine erfindungsgemäße Beschickungsvorrichtung für eine Glasschmelzanlage in einer Prinzipdarstellung. Der in Fig. 1 gezeigte prinzipielle Aufbau der erfindungsgemäßen Beschickungsvorrichtung 10 gilt für alle nachfolgend geschilderten Ausführungsbeispiele.

Die Beschickungsvorrichtung 10 mit einem Rahmen (Gestell) 11, die an einer Schmelzwanne 2 angeordnet ist, befindet sich unterhalb eines Vorratstrichters 5, in dem das zuzuführende Schüttgut (Rohstoffgemenge, Glasscherben) zwischengelagert wird. Das Schüttgut gelangt über jeweils eine trichterförmige Beschickungsöffnung 12 zu drei im Wesentlichen horizontal verlaufenden Fördereinrichtungen 15, welche in horizontaler Richtung nebeneinander angeordnet sind (siehe Fig. 2) und welche das Schüttgut jeweils mittels eines Förderantriebs 16 in die Schmelzwanne 2 befördern. Alternativ kann die Zuführung des Schüttguts auch in ein Doghouse erfolgen. Die Fördereinrichtung 15 kann beispielsweise als Band-Fördereinrichtung oder Schrauben-Fördereinrichtung ausgeführt sein, wobei vorzugsweise, wie in Fig. 2 dargestellt, die Fördereinrichtung 15 in einem geschlossenen, abdichtenden Rohr angeordnet ist. Alternativ kann die Beschickungsvorrichtung lediglich eine Fördereinrichtung 15, zwei Fördereinrichtungen 15 oder mehr als drei Fördereinrichtungen 15 aufweisen.

Zur Abdichtung der Öffnung der Schmelzwanne 2 nach außen weist die Beschickungsvorrichtung 10 eine Dichtplatte 13 auf, welche an der Außenwand der Schmelzwanne 2 abdichtend anliegt. Zur Durchführung der beispielsweise drei nebeneinanderliegenden Fördereinrichtung 15 (siehe Fig. 2) weist die Dichtplatte 13 drei nebeneinander liegende kreisförmige Öffnungen 17 auf, deren Innendurchmesser nur ein wenig größer ist als der Außendurchmesser des Rohrs der jeweiligen Fördereinrichtung 15. Hierdurch wird im Bereich der Fördereinrichtungen 15 eine gute Abdichtung der Schmelzwanne 2 nach außen erzielt.

Die erfindungsgemäße Beschickungsvorrichtung 10 weist zudem zwei Paddel (Schieber) 23 auf, welche jeweils über eine separate Bewegungseinrichtung in Form eines Schubgestänges 20 mit einem separaten Exzenterantrieb 27 verbunden sind. Jedes Paddel 23 führt eine zyklische Bewegung aus, welche durch die Pfeile 25, 26 angedeutet ist und die dazu dient, das auf dem Oberfläche 3 der Glasschmelze (Schmelzenspiegel) abgelegte Schüttgut zu verteilen, um das Aufschmelzen zu verbessern. Die zyklische Bewegung setzt sich zusammen aus kreisförmigen Bewegungen (Pfeil 25) und vertikalen bzw. horizontalen Bewegungen (siehe Pfeile 26). Hierbei wird das Paddel 23 zunächst in das abgelegte Schüttgut eingetaucht und dieses wird mittels einer horizontalen Bewegung des Paddels 23 in Richtung Wannenmitte verschoben. Anschließend wird das Paddel 23 nach oben gehoben und in die Ausgangsposition zurückgeführt. Diese zyklische Bewegung wird durch den mit dem Schubgestänge 20 verbundenen Exzenterantrieb 27 erzeugt.

Da, wie Fig. 1 zeigt, auch das Schubgestänge 20 durch die Dichtplatte 13 hindurch geführt werden muss, sind in der Dichtplatte 13, wie in Fig. 2 dargestellt, für jedes Schubgestänge 20 jeweils eine elliptische Durchführung 19 vorgesehen. Aufgrund der Beweglichkeit des Schubgestänges 20 während des Betriebs der Beschickungsvorrichtung muss jede Durchführung 19 deutlich größer gestaltet sein als es der Durchmesser des Schubgestänges 20 eigentlich erfordern würde. Dieser Freiraum bedingt ohne entsprechende Gegenmaßnahmen einen Staub- und Abgasaustrag aus der Glasschmelzanlage.

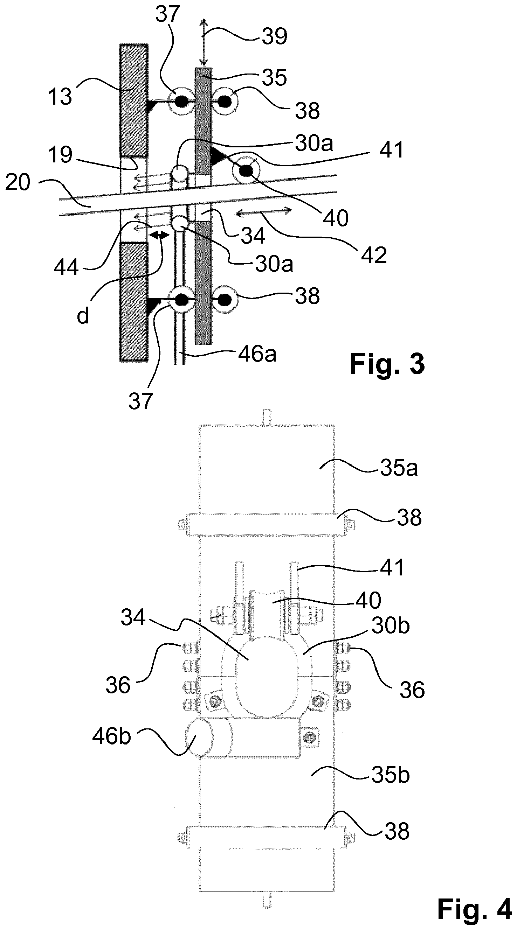

Um den Austritt von Staub und/oder Abgas aus der Glasschmelzanlage zu verhindern, ist, wie in einem ersten Ausführungsbeispiel in Fig. 3 dargestellt, an einer Schiebeplatte 35 eine auf der Vorderseite der Schiebeplatte 35 (d.h. auf der der Glasschmelzanlage zugewandten Seite) angeordnete Ringdüse 30a vorgesehen. Die Ringdüse 30a ist an dem Rand einer durchgehenden Öffnung 34 in der Schiebeplatte 35 angeordnet, durch die das Schubgestänge 20 hindurch geführt ist. Die Öffnung 34 in der Schiebeplatte 35 hat eine kleinere Querschnittsfläche (bzw. kleinere horizontale und/oder vertikale Durchmesser) als die Durchführung 19 der Dichtplatte 13. Die Ringdüse 30a besitzt einen Abstand d von der Durchführung 19 von beispielsweise maximal 40 cm. Für eine bessere Wirkungsweise ist es von Vorteil, wenn die Ringdüse mit einem geringeren Abstand d an der Durchführung 19 angeordnet ist. Das aus der Ringdüse 30a austretende, in Richtung Durchführung 19 gerichtete Gas (siehe Pfeile 44), beispielsweise Luft, erzeugt einen Gegendruck, der gegen in Richtung der Durchführung 19 strömenden Staub und Abgas wirkt und diese hierdurch am Austreten aus der Glasschmelzanlage hindert. Die hierdurch bewirkte Abdichtung der Glasschmelzanlage funktioniert gewissermaßen berührungslos, d.h. ohne mechanischen Kontakt mit der Glasschmelzanlage bzw. mit der Abdichtplatte 13. Hierdurch wird ein Aufheizen der Ringdüse 30a verringert. Das Gas wird mittels einer Gaszuführung 46a zugeführt, die mit der Ringdüse 30a verbunden ist.

Die Ringdüse 30a ist als Kreisring oder Ellipsenring ausgeführt und umschließt das Schubgestänge 20 vorzugsweise vollständig. Die Ringdüse 30 besteht aus einem oder mehreren ringförmigen oder ellipsenförmigen Rohrelement(en) mit einem vorzugsweise flexiblen Anschluss für die Versorgung mit Luft. Das Rohrelement weist über die gesamte Länge, d.h. über den gesamten Umfang, eine Vielzahl von Öffnungen auf, die derart angeordnet sind, dass die aus diesen Öffnungen austretende Luft in Richtung Durchführung 19 der Dichtplatte 13 bzw. der Glasschmelzanlage 2 strömt. Alternativ kann auch eine Vielzahl von Ringdüsen 30a vorgesehen sein, wobei jede Ringdüse 30a jeweils einen anderen Winkel der Strömung der austretenden Luft aufweist.

Die Schiebeplatte 35, mit der die Ringdüse 30a fest verbunden ist, ist vertikal zwischen 2 Paaren von Rollen 37, 38 beweglich geführt (vergleiche Doppelpfeil 39). Die Bewegung der Schiebeplatte 35 verläuft parallel zu der Oberfläche der Dichtplatte 13. Die auf der Seite der Schmelzwanne 2 liegenden Rollen 37 sind mit der Dichtplatte 13 fest verbunden. Gleiches gilt auch für die auf der der Schmelzwanne 2 gegenüberliegenden Seite der Schiebeplatte 35 liegenden Rollen 38. Die Rollen 37, 38 sind jeweils in vertikaler Richtung entlang der Schiebeplatte 35 oberhalb und unterhalb der Ringdüse 30a angeordnet, um eine sichere Fixierung der Schiebeplatte 35 zu bewirken. Durch die vertikale Beweglichkeit der Schiebeplatte (siehe Pfeil 39) und somit der Ringdüse 30a kann die Ringdüse 30a der Bewegung des Schubgestänges 20 in vertikaler Richtung folgen. Da sich das Schubgestänge 20 auch horizontal bewegt (siehe Doppelpfeil 42 in Fig. 3) weist die Schiebeplatte 35 ferner eine Stützrolle 40 auf, welche die Schiebeplatte 35 auf dem Schubgestänge 20 abstützt, obwohl sich das Schubgestänge 20 bei seiner zyklischen Bewegung in horizontaler Richtung bewegt. Hierdurch kann die Schiebeplatte 35 und mit ihr die Ringdüse 30a immer in einer festen vertikalen Position zu dem Schubgestänge 20 bleiben und für eine optimale Abdichtung des Freiraums der Durchführung 19 sorgen. Die Stützrolle 40 ist mittels einer Strebe 41 an der Schiebeplatte 35 befestigt.

Fig. 4 bis 6 und 10 zeigen die Schiebeplatte 35 eines weiteren Ausführungsbeispiels einer erfindungsgemäßen Beschickungsvorrichtung in verschiedenen Ansichten. In Fig. 4 ist erkennbar, dass die Schiebeplatte zweiteilig bestehend aus einem oberen Teil 35a und einem unteren Teil 35b ausgeführt sein kann. Entsprechend ist auch der Düsenring 30b, der in diesem Ausführungsbeispiel auf der der Glasschmelzanlage abgewandten Seite der Schiebeplatte 35a, 35b angeordnet ist, zweiteilig gestaltet. Der erste Teil 35a und der zweite Teil 35b der Schiebeplatte sowie beide Teile des Düsenrings 30b können bei der Montage der Beschickungsvorrichtung um das Schubgestänge 20 herum angeordnet und mittels Befestigungsschrauben 36 aneinander befestigt werden.

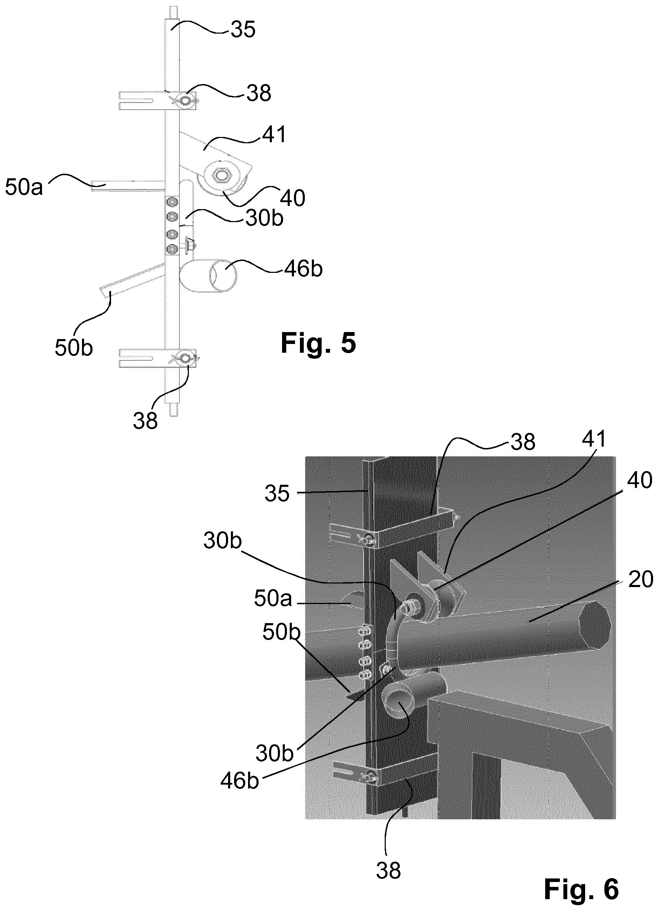

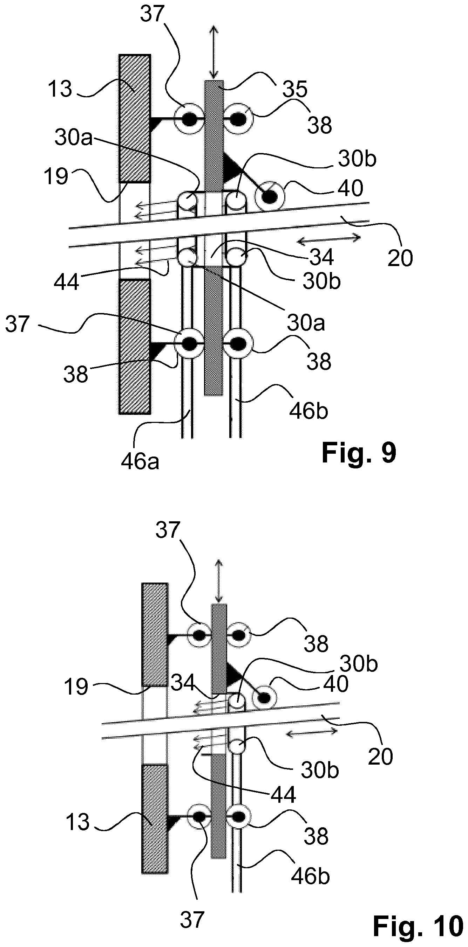

Weiter sind bei diesem Ausführungsbeispiel zwei Leitbleche 50a, 50b vorgesehen ist, welche das aus der Ringdüse 30b austretende Gas in Richtung Durchführung 19 der Dichtplatte 13 bzw. Glasschmelzanlage lenken. Die in Fig. 10 gezeigte Variante besitzt diese Leitbleche nicht. Jedes der schalenförmigen Leitbleche 50a, 50b steht senkrecht bzw. unter einem großen Winkel zur Oberfläche der Schiebeplatte 35 und weist zudem, wie insbesondere aus Fig. 6 ersichtlich ist, eine konkave Rundung auf, durch die das aus der Ringdüse 30b austretende Gas besonders effektiv in Richtung Durchführung 19 gelenkt wird.

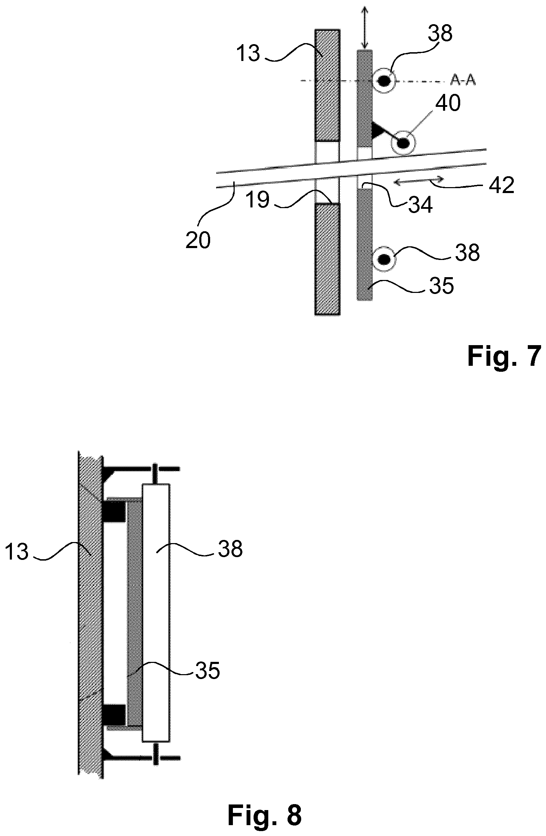

Anhand von Fig. 7 soll gezeigt werden, dass die Beweglichkeit der Schiebeplatte 35 in vertikaler Richtung auch durch lediglich zwei untereinander, auf der gleichen Seite der Schiebeplatte 35 angeordnete Rollen 38 erfolgen kann. In diesem Fall sind die Rollen 38 auf der der Glasschmelzanlage abgewandten Seite der Schiebeplatte angeordnet. Die Rollen 38 sind ferner, wie Fig. 8 zeigt, an der Dichtplatte 13 befestigt und von dieser beabstandet. Vorzugsweise wird die Schiebeplatte 35 mit einer entsprechenden, nicht gezeigten Federeinrichtung permanent an die Rollen 38 gedrückt, um die räumliche Fixierung der Schiebplatte 35 zu bewirken. Die Gasdüsen sind bei der Darstellung dieses Ausführungsbeispiels nicht gezeigt.

Das in Fig. 9 gezeigte Ausführungsbeispiele weist zwei Ringdüsen 30a, 30b auf, wobei die erste Ringdüse 30a auf der der Glasschmelzanlage zugewandten Seite der Schiebeplatte 35 und die zweite Ringdüse 30b auf der der Glasschmelzanlage abgewandten Seite der Schiebeplatte angeordnet ist. Jede Ringdüse 30a, 30b ist am umlaufenden Rand der Öffnung 34 der Schiebeplatte 35 befestigt und mit einer separaten Gaszuführung 46a, 46b versehen.

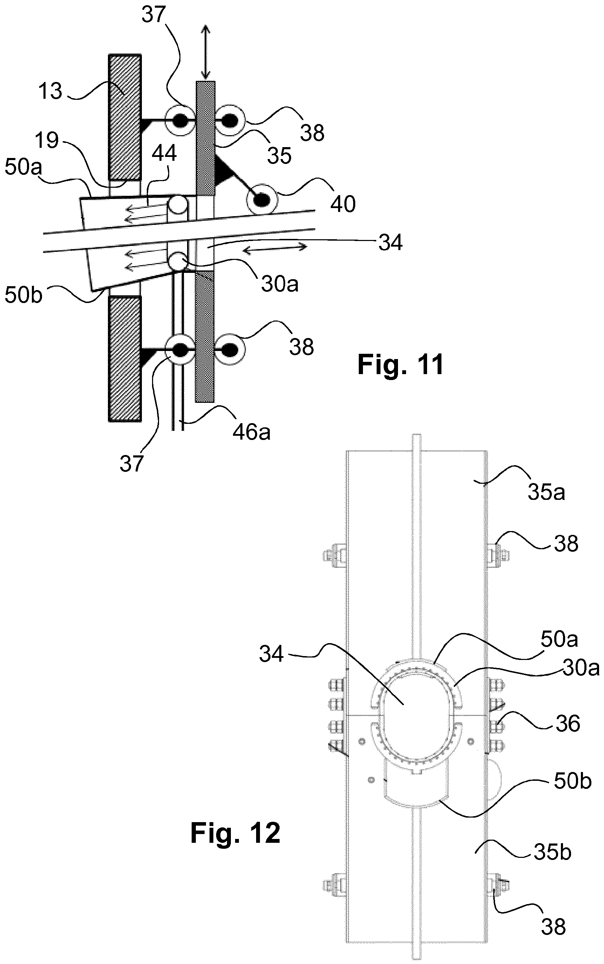

Das Ausführungsbeispiel gemäß Fig. 11 und 12 besitzt lediglich auf der der Glasschmelzanlage zugewandten Seite der Schiebeplatte 35 eine Ringdüse 30a und zusätzlich Leitbleche 50a, 50b analog zu dem Ausführungsbeispiel gemäß Fig. 4 bis 6. Hierbei ist die auf der der Glaschmelzanlage zugewandten Seite der Schiebeplatte 35 angeordnete Ringdüse 30a direkt zwischen den Leitblechen 50a, 50b platziert.

Die erfindungsgemäße Beschickungsvorrichtung mit der mindestens einen Gasdüse an der Dichtplatte 13, welche vorzugsweise als ringförmige oder elliptischer Düsenring ausgeführt ist, bewirkt eine besonders effektive Abdichtung der Durchführung 19 für das Schubgestänge 20 des jeweiligen Paddels 23. Hierbei wird der Durchmesser des Düsenrings bzw. der Abstand der um das Schubgestänge herum angeordneten Gasdüsen an die Größe der jeweiligen Durchführung angepasst.

### Bezugszeichenliste

- 2: Schmelzwanne
- 3: Schmelzenspiegel
- 5: Vorratstrichter
- 10: Beschickungsvorrichtung
- 11: Rahmen (Gestell)
- 12: Beschickungsöffnung
- 13: Dichtplatte
- 15: Fördereinrichtung
- 16: Förderantrieb
- 17: Öffnung in der Dichtplatte 13 für Fördereinrichtung 15
- 19: Durchführung in der Dichtplatte 13 für Schubgestänge 20
- 20: Schubgestänge
- 23: Paddel
- 25, 26: Pfeil
- 27: Exzenterantrieb
- 30a, 30b: Ringdüse
- 34: Öffnung in der Schiebeplatte 35
- 35: Schiebeplatte
- 35a, 35b: Teil der Schiebeplatte
- 36: Befestigungsschraube
- 37,38: Rolle
- 39, 42: Pfeil
- 40: Stützrolle
- 41: Strebe
- 46a, 46b: Gaszuführung mit flexiblem Anschluss an die jeweilige Ringdüse
- 50a, 50b: Leitblech
- d: Abstand zwischen Durchführung und Gasdüse

## Patentansprüche

1. Beschickungsvorrichtung (10) für eine Glasschmelzanlage mit einer Abdichteinrichtung (13) und mindestens einer Bewegungseinrichtung (20), wobei die Bewegungseinrichtung (20) im Betrieb der Beschickungsvorrichtung eine zyklische Bewegung ausführt und entlang mindestens einer Durchführung (19) durch die Abdichteinrichtung (13) hindurchgeführt ist, **dadurch gekennzeichnet, dass** benachbart zu einem offenen Bereich jeder Durchführung (19) mindestens eine Gasdüse (30a, 30b) auf der der Glasschmelzanlage abgewandten Seite der Abdichteinrichtung (13) derart angeordnet ist, dass das aus der mindestens einen Gasdüse (30a, 30b) strömende Gas die Menge an Staub und/oder Abgas verringert, die aus der Glasschmelzanlage durch die jeweilige Durchführung (19) hindurch auf die der Glasschmelzanlage abgewandten Seite der Abdichteinrichtung (13) gelangt, und dass ein Düsenring (30a, 30b) vorgesehen ist, der sich um die vorzugsweise stangenförmige Bewegungseinrichtung (20) herum erstreckt und eine Vielzahl von Gasdüsen aufweist.

2. Beschickungsvorrichtung nach Anspruch 1, **dadurch gekennzeichnet, dass** an der mindestens einen Bewegungseinrichtung (20) ein Schieber (23) angeordnet ist, der auf der der Glasschmelzanlage zugewandten Seite der Abdichteinrichtung (13) an der Bewegungseinrichtung (20) vorzugsweise lösbar befestigt ist.

3. Beschickungsvorrichtung nach einem der vorhergehenden Ansprüche, **dadurch gekennzeichnet, dass** ein Mitnehmer (35, 35a, 35b) vorgesehen ist, an welchem die mindestens eine Gasdüse (30a, 30b) befestigt ist und welcher die mindestens eine Gasdüse bei einer Bewegung der Bewegungseinrichtung relativ zu der Abdichteinrichtung (13) derart verschiebt, dass der Gasstrom der mindestens einen Gasdüse stets auf den offenen Bereich der Durchführung (19) gerichtet ist.

4. Beschickungsvorrichtung nach Anspruch 3, **dadurch gekennzeichnet, dass** der Mitnehmer (35, 35a, 35b) plattenförmig gestaltet ist, wobei die Platte eine Öffnung oder Ausnehmung (34) aufweist, durch die die Bewegungseinrichtung (20) hindurch geführt ist.

5. Beschickungsvorrichtung nach einem der Ansprüche 3 bis 4, **dadurch gekennzeichnet, dass** der Mitnehmer (35, 35a, 35b) an der der Abdichteinrichtung (13) zugewandten Seite eine Leiteinrichtung (50a, 50b) aufweist, welche das der mindestens einen Gasdüse entweichende Gas in Richtung Durchführung (19) lenkt.

6. Beschickungsvorrichtung nach einem der Ansprüche 3 bis 5, **dadurch gekennzeichnet, dass** der Mitnehmer (35, 35a, 35b) mittels einer Rolle (40) an der Bewegungseinrichtung (20) abgestützt ist.

7. Beschickungsvorrichtung nach einem der Ansprüche 3 bis 6, **dadurch gekennzeichnet, dass** der Mitnehmer (35, 35a, 35b) mittels mindestens einer Rolle (37, 38) und/oder einer Schiene parallel zu der Abdichteinrichtung (13) geführt wird.

8. Beschickungsvorrichtung nach einem der Ansprüche 3 bis 7, **dadurch gekennzeichnet, dass** der Mitnehmer (35, 35a, 35b) plattenförmig gestaltet ist.

9. Beschickungsvorrichtung nach einem der Ansprüche 3 bis 8, **dadurch gekennzeichnet, dass** der Mitnehmer (35a, 35b) mehrteilig gestaltet ist.

10. Beschickungsvorrichtung nach einem der Ansprüche 3 bis 9, **dadurch gekennzeichnet, dass** eine Vielzahl von Gasdüsen oder der Düsenring sich zumindest teilweise entlang des Randes einer Ausnehmung oder Öffnung in dem Mitnehmer (35, 35a, 35b) erstreckt.

11. Beschickungsvorrichtung nach einem der vorhergehenden Ansprüche, **dadurch gekennzeichnet, dass** der Ausgangsdruck der mindestens einen Gasdüse mindestens 80% des Betrags des Innendrucks der Glasschmelzanlage, vorzugsweise mindesten 90% des Betrags des Innendrucks der Glasschmelzanlage, besonders bevorzugt maximal 200% des Betrags des Innendrucks der Glasschmelzanlage beträgt.

## Claims

1. A feeding device (10) for a glass melting apparatus with a sealing mechanism (13) and at least one kinetic mechanism (20), wherein, when the feeding device is in operation, the kinetic mechanism (20) performs a cyclical movement and is guided through the sealing mechanism (13) along at least one passage (19), **characterized in that,** adjacent to an open area of each passage (19), at least one gas nozzle (30a, 30b) is arranged on the side of the sealing mechanism (13) facing away from the glass melting apparatus, so that the gas flowing out of the at least one gas nozzle (30a, 30b) reduces the amount of dust and/or exhaust from the glass melting apparatus that reaches the side of the sealing mechanism (13) facing away from the glass melting apparatus through the corresponding passage (19), and **in that** a nozzle ring (30a, 30b) is provided, which extends around the preferably rod-shaped kinetic mechanism (20) and includes a plurality of gas nozzles.

2. The feeding device according to claim 1, **characterized in that** a pushing element (23) is arranged on the at least one kinetic mechanism (20), said pushing element (23) being attached in a preferably detachable manner on the kinetic mechanism (20) on the side of the sealing mechanism (13) facing the glass melting apparatus.

3. The feeding device according to one of the preceding claims, **characterized in that** a carrier element (35, 35a, 35b) is provided, on which the at least one gas nozzle (30a, 30b) is attached and which moves the at least one gas nozzle when the kinetic mechanism is moved in relation to the sealing mechanism (13) so that the gas flow of the at least one gas nozzle is constantly directed at the open area of the passage (19).

4. The feeding device according to claim 3, **characterized in that** the carrier element (35, 35a, 35b) is formed so as to be plate-shaped, wherein the plate has an opening or aperture (34) through which the kinetic mechanism (20) is guided.

5. The feeding device according to one of claims 3 to 4, **characterized in that** the carrier element (35, 35a, 35b) includes, on its side facing the sealing mechanism (13), a guiding mechanism (50a, 50b), which directs the gas escaping from the at least one gas nozzle toward the passage (19).

6. The feeding device according to one of claims 3 to 5, **characterized in that** the carrier element (35, 35a, 35b) is supported by means of a roller (40) on the kinetic mechanism (20).

7. The feeding device according to one of claims 3 to 6, **characterized in that** the carrier element (35, 35a, 35b) is guided by at least one roller (37, 38) and/or a rail parallel to the sealing mechanism (13).

8. The feeding device according to one of claims 3 to 7, **characterized in that** the carrier element (35, 35a, 35b) is formed so as to be plate-shaped.

9. The feeding device according to one of claims 3 to 8, **characterized in that** the carrier element (35a, 35b) is formed so as to comprise a plurality of parts.

10. The feeding device according to one of claims 3 to 9, **characterized in that** a plurality of gas nozzles or the nozzle ring extend at least partially along the edge of an aperture or opening in the carrier element (35, 35a, 35b) .

11. The feeding device according to one of the preceding claims, **characterized in that** the outlet pressure of the at least one gas nozzle is at least 80 % of the amount of the interior pressure of the glass melting apparatus, preferably at least 90 % of the amount of the interior pressure of the glass melting apparatus, particularly preferably a maximum of 200 % of the amount of the interior pressure of the glass melting apparatus.

## Revendications

1. Dispositif de chargement (10) d'une fonderie de verre, pourvu d'un système d'étanchéité (13) et d'au moins un système de déplacement (20), en service du dispositif de chargement, le système de déplacement (20) effectuant un déplacement cyclique et en étant conduit le long d'au moins un passage (19) à travers le système d'étanchéité (13), **caractérisé en ce qu'**au voisinage d'une zone ouverte de chaque passage (19), au moins une buse à gaz (30a, 30b) est placée sur le côté du système d'étanchéité (13) qui est opposé à la fonderie de verre, de telle sorte que le gaz s'écoulant hors de l'au moins une buse à gaz (30a, 30b) réduise la quantité de poussière et/ou de gaz de combustion qui au départ de la fonderie de verre, arrive à travers le passage (19) en question sur le côté du système d'étanchéité (13) qui est opposé à la fonderie de verre, et **en ce qu'**il est prévu un couronne de buse (30a, 30b) qui s'étend autour du système de déplacement (20) de préférence en forme de barre et qui comporte une pluralité de buses à gaz.

2. Dispositif de chargement selon la revendication 1, **caractérisé en ce que** sur l'au moins un système de déplacement (20) est placé un curseur (23), qui sur le côté du système d'étanchéité (13) qui est opposé à la fonderie de verre est fixé, de préférence de manière amovible, sur système de déplacement (20).

3. Dispositif de chargement selon l'une quelconque des revendications précédentes, **caractérisé en ce qu'**il est prévu un entraîneur (35, 35a, 35b), sur lequel est fixée l'au moins une buse à gaz (30a, 30b) et lequel lors d'un déplacement du système de déplacement par rapport au système d'étanchéité (13), décale l'au moins une buse à gaz de telle sorte que le flux gazeux de l'au moins une buse à gaz soit toujours dirigé sur la zone ouverte du passage (19).

4. Dispositif de chargement selon la revendication 3, **caractérisé en ce que** l'entraîneur (35, 35a, 35b) est conçu en forme de plaque, la plaque comportant un orifice ou un évidement (34) à travers lequel le système de déplacement (20) est conduit.

5. Dispositif de chargement selon l'une quelconque des revendications 3 à 4, **caractérisé en ce que** sur le côté dirigé vers le système d'étanchéité (13), l'entraîneur (35, 35a, 35b) comporte un système de guidage (50a, 50b), lequel guide le gaz s'échappant de l'au moins une buse à gaz en direction du passage (19) .

6. Dispositif de chargement selon l'une quelconque des revendications 3 à 5, **caractérisé en ce que** l'entraîneur (35, 35a, 35b) s'appuie au moyen d'un galet (40) sur le système de déplacement (20).

7. Dispositif de chargement selon l'une quelconque des revendications 3 à 6, **caractérisé en ce que** l'entraîneur (35, 35a, 35b) est guidé au moyen d'au moins un galet (37, 38) et/ou d'une glissière à la parallèle du système d'étanchéité (13).

8. Dispositif de chargement selon l'une quelconque des revendications 3 à 7, **caractérisé en ce que** l'entraîneur (35, 35a, 35b) est conçu en forme de plaque.

9. Dispositif de chargement selon l'une quelconque des revendications 3 à 8, **caractérisé en ce que** l'entraîneur (35a, 35b) est conçu en plusieurs parties.

10. Dispositif de chargement selon l'une quelconque des revendications 3 à 9, **caractérisé en ce qu'**une pluralité de buses à gaz ou la couronne de buse s'étend au moins en partie le long du bord d'un évidement ou d'un orifice dans l'entraîneur (35, 35a, 35b) .

11. Dispositif de chargement selon l'une quelconque des revendications précédentes, **caractérisé en ce que** la pression de sortie de l'au moins une buse à gaz s'élève à au moins 80 % de la valeur de la pression interne de la fonderie de verre, de préférence à au moins 90 % de la valeur de la pression interne de la fonderie de verre, de manière particulièrement préférentielle, à un maximum de 200 % de la valeur de la pression interne de la fonderie de verre.
